# FASCICULE DE BREVET EUROPEEN

(11) **EP 1 923 262 B1**
(45) Date de publication et mention de la délivrance du brevet: **21.08.2013**
(21) Numéro de dépôt: 07120726.0
(22) Date de dépôt: 14.11.2007
(51) Int. Cl.: B60Q 1/08

(54) **Procédé d'adaptation automatique d'un faisceau lumineux de dispositif projecteur**
Verfahren zur automatischen Anpassung eines Leuchtstrahls eines Projektors
Method for automatically adjusting the light beam of a headlight device

(30) Priorité: 17.11.2006 FR 0610088
(43) Date de publication de la demande: 21.05.2008
(73) Titulaire: VALEO VISION, 93012 Bobigny (FR)
(72) Inventeur: Moizard, Julien, 75012 Paris (FR); Reiss, Benoît, 95600 Eaubonne (FR); Albou, Pierre, 75013 Paris (FR); Bourdin, David, 93190 Livry Gargan (FR)

(56) Documents cités:
- EP-A- 1 283 127
- WO-A-03/053737
- DE-A1- 4 439 556
- DE-A1- 10 355 757
- DE-A1- 19 716 784
- DE-A1-102004 063 836
- DE-B4- 19 758 664
- US-A- 5 138 540
- US-A- 5 645 338
- US-A1- 2002 196 636
- US-A1- 2004 052 083

## Description

### DOMAINE TECHNIQUE DE L'INVENTION

La présente invention a pour objet un procédé d'adaptation automatique d'un faisceau lumineux émis par un dispositif projecteur, notamment de véhicule automobile. Un but essentiel de l'invention est d'optimiser automatiquement, en fonction du trafic observé sur une route, l'éclairage généré par un véhicule empruntant ladite route, notamment en proposant un faisceau lumineux dont les performances et ou les caractéristiques, en terme de portée et d'intensité lumineuse, sont comprises entre celles des faisceaux lumineux produits par les dispositifs projecteur réalisant une fonction code et celles des faisceaux lumineux produits par les dispositifs projecteurs réalisant une fonction route.

Le domaine de l'invention est, d'une façon générale, celui des projecteurs de véhicule automobile. Dans ce domaine, on connaît différents types de dispositifs projecteurs classiques, parmi lesquels on trouve essentiellement :
- des feux de position, d'intensité et de portée faible ;
- des feux de croisement, ou codes, d'intensité plus forte et de portée sur la route avoisinant 60 mètres, qui sont utilisés essentiellement la nuit et dont la répartition du faisceau lumineux est telle qu'elle permet de ne pas éblouir le conducteur d'un véhicule croisé ;
- des feux de route longue portée, dont la zone de vision sur la route avoisine 200 mètres, et qui doivent être éteints lorsque l'on croise un autre véhicule afin de ne pas éblouir son conducteur ;
- des feux anti-brouillard...

Par ailleurs, on connaît un type de projecteurs perfectionnés, appelés projecteurs bifonctions, qui cumulent les fonctions de feux de croisement et de feux longue portée : à cet effet, on peut par exemple disposer à l'intérieur du projecteur bifonctions un cache amovible, constitué par exemple d'une plaque métallique, pouvant passer sur commande d'une première position dans laquelle il n'occulte pas le signal lumineux produit par la source lumineuse du projecteur, la portée du projecteur correspondant alors à celle des feux de route, à une deuxième position dans laquelle il occulte une partie du signal lumineux produit par la source lumineuse du projecteur, la portée du projecteur étant alors limitée à celle des feux de croisement. Le projecteur doit, dans la deuxième position, engendrer un faisceau à coupure réglementaire correspondant à un faisceau de type code classique, la forme de la coupure étant donnée par la forme du cache interceptant une partie du signal lumineux. Cet exemple de réalisation est principalement mis en oeuvre dans les dispositifs projecteurs de type elliptiques.

Cependant les dispositifs projecteurs classiques qui viennent d'être évoqués, plus particulièrement ceux qui sont utilisés comme feux de croisement, produisent des faisceaux lumineux qui sont perfectibles lorsque ces dispositifs projecteurs sont utilisés dans certaines conditions afin d'améliorer le confort de conduite.

Ainsi, lorsqu'un véhicule est sur une autoroute, il est judicieux de relever la ligne de coupure par rapport à celle d'un faisceau de type code classique, et de concentrer le flux lumineux du feu de croisement au niveau de l'axe optique du dispositif projecteur ; on fait ainsi porter efficacement un peu plus loin le faisceau produit. A l'opposé, lorsqu'un véhicule circule en ville, il n'est pas nécessaire de faire porter le faisceau lumineux aussi loin que sur des routes dégagées.

Aussi, en complément des fonctions projecteurs principales classiques, notamment codes et routes, différents perfectionnements sont progressivement apparus. On a ainsi vu se développer des fonctions élaborées, ou fonctions avancées, connues sous le nom de fonctions AFS (pour Advanced Front light System en langue anglaise) qui modifient légèrement le positionnement de la coupure du faisceau lumineux produit, et éventuellement sa répartition en terme d'intensité lumineuse, parmi lesquelles on trouve notamment une fonction dite Motorway Light en anglais, pour faisceau d'autoroute. Cette fonction assure une augmentation de la portée d'un feu de croisement, notamment en augmentant l'intensité lumineuse du faisceau qu'elle génère en plusieurs points de l'espace, et en présentant une ligne de coupure relevée par rapport à celle d'un code classique. En outre, la valeur d'éclairement maximum autorisé passe, en Europe, de 70 Lux à 120 Lux.

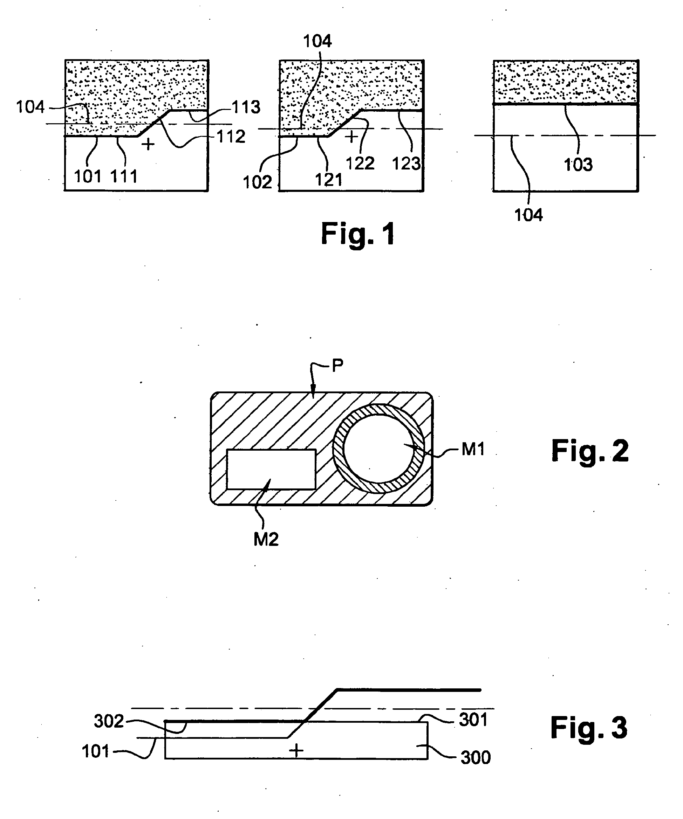

A la figure 1, on a représenté, à titre d'exemple et de façon schématique, trois projections théoriques sur une surface plane de différents faisceaux lumineux qui viennent d'être mentionnés. Les faisceaux représentés correspondent à ceux existant dans les pays où la conduite s'effectue à droite de la route. On obtient les faisceaux correspondant à une conduite à gauche par simple symétrie. La surface plane de projection est disposée face au dispositif projecteur considéré, perpendiculairement à son axe optique. La partie grisée de ces projections correspond à une absence de lumière dans la zone correspondante de l'espace, la partie laissée blanche correspondant à une zone de l'espace éclairée de façon réglementaire au moyen du dispositif projecteur considéré.

On a ainsi représenté une première ligne coupure théorique 101, correspondant à un faisceau code, une deuxième ligne de coupure théorique 102, correspondant à un faisceau d'autoroute, et une troisième ligne de coupure théorique 103, correspondant à un faisceau route. La ligne d'horizon 104 est représentée en pointillés. La ligne de coupure théorique du faisceau de type code, respectivement du faisceau de type autoroute, est constituée :
- d'une première partie 111, respectivement 121, qui prend la forme d'un premier segment plat horizontal disposé sous la ligne d'horizon 104 ; dans le cas du faisceau de type code, l'angle de projection observé entre la ligne d'horizon et le premier segment est de - 0,57 degrés, alors que dans le cas du faisceau de type autoroute, l'angle de projection observé entre la ligne d'horizon et le premier segment est de - 0,34 degrés ;
- d'une deuxième partie 112, respectivement 122, qui prend la forme d'un segment incliné d'environ 15 degrés par rapport à l'horizontale, traversant la ligne d'horizon 104;
- d'une troisième partie 113, respectivement 123, qui prend la forme d'un deuxième segment plat horizontal disposé légèrement au-dessus de la ligne d'horizon 104.

De telles lignes de coupure permettent de ne pas éblouir les conducteurs croisés ou suivis, en maintenant la ligne de coupure sous la ligne d'horizon sur la partie gauche de la route, tout en offrant une zone de l'espace éclairée plus importante sur la partie droite de la route. A l'inverse, la ligne de coupure 103 du faisceau de type route, située nettement au-dessus de la ligne d'horizon, entraîne l'éblouissement du conducteur suivi ou croisé. Ce type de fonction n'est donc utilisée que dans des conditions particulières, notamment en l'absence de véhicules suivis ou croisés.

Le faisceau de type autoroute correspond donc à un faisceau de type code dont on a relevé la partie horizontale de la ligne de coupure (sur la gauche du véhicule pour un sens de conduite à droite), mais aussi dont on a augmenté l'intensité lumineuse. La fonction autoroute peut être réalisée aux moyens de différents types de dispositifs projecteurs. Un premier exemple de réalisation réside dans l'existence d'une plieuse sur le cache précédemment mentionné, intervenant dans les dispositifs projecteurs bifonctions. Une plieuse correspond à une partie du cache qui prend une position horizontale, orientée vers la source lumineuse du dispositif projecteur considéré, lorsque le cache est positionné de façon à intercepter une partie des rayons lumineux produits par ladite source lumineuse. La plieuse permet alors de réfléchir une partie des rayons lumineux qui auraient été interceptés par le cache en l'absence de la plieuse, permettant ainsi d'augmenter l'intensité lumineuse émise, et de relever le faisceau lumineux produit par rapport au faisceau lumineux produit par un code classique.

Un deuxième exemple de réalisation d'un dispositif projecteur permettant de réaliser une fonction autoroute est montré schématiquement à la figure 2. Une projection du faisceau lumineux produit par un tel dispositif projecteur est montré à la figure 3. A la figure 2, un dispositif projecteur P comprend un premier module optique M1 et un deuxième module optique M2. Par module optique, on désigne ici un système optique comprenant au moins une source lumineuse, éventuellement disposée dans un réflecteur, et éventuellement associée à un ou plusieurs éléments dioptriques du type lentille ;la source lumineuse peut par exemple être réalisée par une ou plusieurs diodes électroluminescentes regroupées, ou par une lampe halogène ou xénon dans un réflecteur ; le système optique considéré est de préférence autonome, c'est-à-dire apte à être allumé ou éteint séparément des autres modules du projecteur.

Dans cet exemple, le premier module M1 est par exemple apte à réaliser la fonction code classique ; il reproduit donc la ligne de coupure 101 précédemment décrite. Le premier module M1 peut également être un module bifonctions code/route. Le deuxième module M2 est un module complémentaire ; par exemple, le deuxième module peut comporter une ou plusieurs diodes électroluminescentes, ou leds, et une lentille assurant une ligne de coupure au moins partiellement plate ; dans d'autres exemples de réalisation, d'autres sources lumineuses que des leds sont utilisées pour réaliser le deuxième module M2.

L'activation du deuxième module M2, si elle se produisait sans l'activation du premier module M1, produirait un faisceau lumineux dont la projection 300 serait de forme globalement rectangulaire ou trapézoïdale, légèrement sous la ligne d'horizon 104 ; l'angle de projection observé entre la ligne d'horizon et une ligne supérieure 301 de la projection lumineuse 300 est typiquement de - 0,34 degrés. L'activation du deuxième module M2 combinée avec l'activation du premier module M1 génère donc un faisceau lumineux dont la forme globale est similaire à celle d'un code, mais avec une ligne de coupure 302, représentée en gras à la figure 3, relevée au moins sur la partie gauche de la route, et dont l'intensité lumineuse est augmentée, par rapport à l'intensité lumineuse d'un code, à proximité de la ligne de coupure du faisceau global produit. Un tel faisceau global peut donc être utilisé pour réaliser la fonction autoroute.

D'autres exemples de dispositifs projecteurs permettant de produire un faisceau de type autoroute existent dans l'état de la technique, par exemple les dispositifs projecteurs multifonctions qui comprennent une source lumineuse et un cache mobile occultant sélectivement une partie du flux lumineux émis par la source, permettant ainsi de réaliser les fonctions codes, routes et autoroutes. Dans l'invention, on pourra utiliser tout type de dispositif apte à produire au moins un faisceau lumineux de type code classique et un faisceau lumineux de type autoroute ; avantageusement, les dispositifs projecteurs utilisés seront aptes à produire également les faisceaux lumineux de type route.

### ARRIERE-PLAN TECHNOLOGIQUE DE L'INVENTION

Dans le but général d'améliorer le confort de conduite en terme de visibilité, il existe, dans l'état de la technique, des modules bifonctions dont la commutation de la fonction code à la fonction route, et vice-versa, est automatique, ladite commutation dépendant des conditions de circulation. Avec des véhicules équipés de tels modules bifonctions, on procède à la recherche de la présence d'un véhicule susceptible d'être ébloui par une utilisation de la fonction route. Si aucun véhicule n'est détecté, la fonction route est automatiquement activée. Dès que la présence d'un véhicule est détectée, la fonction route est automatiquement désactivée, et le véhicule équipé du projecteur bifonctions présente de nouveau un faisceau lumineux de type code.

Dans la pratique, on fixe à 600 mètres la valeur seuil à partir de laquelle l'absence de véhicule détecté autorise la commutation vers la fonction route. Dès qu'un véhicule est détecté à moins de 600 mètres du véhicule équipé, c'est la fonction code qui est activée. Or cette fonction n'assure un éclairage pleinement satisfaisant que sur une distance avoisinant 60 à 80 mètres. Il existe donc de nombreuses configurations de circulation, celles dans lesquelles le premier véhicule susceptible d'être ébloui est situé à plus d'une centaine de mètres et à moins de 600 mètres du véhicule équipé, pour lesquelles l'éclairage de la route pourrait être optimisé sans pour autant éblouir le conducteur d'un quelconque autre véhicule.

### DESCRIPTION GENERALE DE L'INVENTION

C'est un objet de l'invention de répondre au problème qui vient d'être mentionné. Dans l'invention, on propose d'éclairer de façon optimale, ou au moins améliorée par rapport aux solutions existantes, une route empruntée par un véhicule considéré mettant en oeuvre le procédé selon l'invention, tout en assurant le non éblouissement des autres véhicules. A cet effet, on propose, dans l'invention, de détecter la distance entre le véhicule considéré et le premier véhicule susceptible d'être ébloui par ledit véhicule considéré, et de générer en conséquence un faisceau lumineux optimisé en terme de portée sur la route, et avantageusement également en terme d'intensité lumineuse ; selon l'invention, l'optimisation du faisceau lumineux produit est réalisée par l'utilisation de la fonction autoroute disponible sur le véhicule considéré. L'utilisation de cette fonction dans ce contexte assure par ailleurs une transition relativement progressive entre la fonction de type code et la fonction de type route dans le cadre d'opérations de commutation automatique entre ces fonctions.

Avantageusement, on propose dans l'invention de modifier la répartition lumineuse et/ou de décaler le faisceau lumineux produit par la fonction autoroute en fonction de la position relative des véhicules. On comprend par faisceau décalé un faisceau dont la direction principale du faisceau, c'est à dire la direction dans laquelle est l'intensité lumineuse émise est maximale, a été réorientée, mais sans modifier substantiellement la distribution angulaire par rapport à la forme du faisceau en question.

L'invention concerne donc essentiellement un procédé d'adaptation automatique d'un faisceau lumineux d'un dispositif projecteur d'un premier véhicule automobile circulant sur une route, ledit dispositif projecteur étant apte à réaliser une fonction d'éclairage de type code, produisant un faisceau lumineux de type code, et une fonction d'éclairage de type autoroute, produisant un faisceau lumineux de type autoroute, la fonction d'éclairage de type code étant activée, caractérisé en ce qu'il comporte les différentes étapes consistant à :
- détecter la présence d'au moins un deuxième véhicule, suivi ou croisé, à ne pas éblouir ;
- estimer une distance instantanée séparant le premier véhicule du deuxième véhicule;
- déterminer si la distance instantanée estimée est supérieure à une première valeur seuil, dite valeur seuil d'activation de la fonction d'éclairage autoroute ; le cas échéant, activer la fonction d'éclairage autoroute.

Le procédé selon l'invention peut également présenter, outre les caractéristiques principales énoncées dans le paragraphe précédent, une ou plusieurs des caractéristiques complémentaires suivantes ; toute combinaison de ces caractéristiques complémentaires, dans la mesure où elles ne s'excluent pas mutuellement, constitue un exemple avantageux de réalisation de l'invention:
- le procédé comporte les différentes étapes supplémentaires consistant à, après l'activation de la fonction d'éclairage de type autoroute :
   - estimer une nouvelle distance séparant le premier véhicule d'un troisième véhicule à ne pas éblouir;
   - déterminer si la nouvelle distance estimée est inférieure à une deuxième valeur seuil, dite valeur seuil de désactivation de la fonction d'éclairage autoroute ; le cas échéant, désactiver la fonction d'éclairage de type autoroute.
- le procédé comporte les étapes supplémentaires consistant à :
   - déterminer la nature du véhicule à ne pas éblouir en établissant si le véhicule à ne pas éblouir est un véhicule croisé ou un véhicule suivi ;
   - adapter la première valeur seuil et/ou la deuxième valeur seuil en fonction de la détermination de la nature du véhicule.
   - le véhicule à ne pas éblouir est le véhicule le plus proche du premier véhicule.
   - le deuxième véhicule et le troisième véhicule sont un unique véhicule.
   - la première valeur seuil et la deuxième valeur seuil sont identiques.
   - la première valeur seuil est sensiblement supérieure à la deuxième valeur seuil.
   - la première valeur seuil dépend du caractère croisé ou suivi du deuxième véhicule.
   - la deuxième valeur seuil dépend du caractère croisé ou suivi du troisième véhicule
   - l'étape d'activation de la fonction d'éclairage de type autoroute comporte notamment une première opération consistant à moduler une puissance lumineuse supplémentaire s'ajoutant à une puissance lumineuse disponible pour la réalisation de la fonction d'éclairage de type code.
   - l'étape d'activation de la fonction d'éclairage de type autoroute comporte notamment une deuxième opération consistant à décaler vers l'axe optique du dispositif projecteur observé lorsqu'il produit uniquement le faisceau de type autoroute, un axe d'intensité maximale du faisceau lumineux de type autoroute.
   - l'étape d'activation de la fonction d'éclairage de type autoroute comporte notamment une troisième opération consistant à décaler vers le haut un faisceau lumineux complémentaire produit lors de l'activation de la fonction d'éclairage de type autoroute.
   - l'étape d'activation de la fonction d'éclairage de type autoroute comporte notamment une quatrième opération consistant à décaler vers le haut le faisceau lumineux de type autoroute.
   - les opérations de modulation et de décalage sont mises en oeuvre de façon progressive, en fonction de la distance évaluée entre le premier véhicule et le véhicule à ne pas éblouir, pour optimiser l'éclairage de la route. Par optimisation de l'éclairage de la route, on désigne l'augmentation, au moins en certains points, de l'intensité lumineuse du faisceau lumineux produit et/ou un éclairage de la route aussi lointain que possible sans pour autant provoquer l'éblouissement des conducteurs adverses.
   - la première opération ; ou la deuxième opération ; ou soit la troisième opération soit la quatrième opération ; sont réalisées si la distance instantanée estimée est supérieure respectivement à une première valeur de référence, à une deuxième valeur de référence, ou à une troisième valeur de référence, avec la troisième valeur de référence supérieure à la deuxième valeur de référence, et la deuxième valeur de référence supérieure à la première valeur de référence.
   - le dispositif projecteur est constitué d'un premier module optique, apte à réaliser la fonction code, et d'un deuxième module optique, intervenant dans la réalisation de la fonction autoroute, le premier module optique et le deuxième module optique étant autonomes, le deuxième module optique comportant notamment une source lumineuse, une lentille et un moteur spécifique apte à provoquer un mouvement relatif entre la lentille et ladite source lumineuse.
   - le dispositif projecteur est constitué d'un premier module optique, apte à réaliser la fonction code, et d'un deuxième module optique, intervenant dans la réalisation de la fonction autoroute, le premier module optique et le deuxième module optique étant autonomes, le deuxième module optique comportant notamment une source lumineuse à semi conducteur de forme sensiblement rectangulaire, un miroir de sortie générant par lui-même un faisceau lumineux à coupure et un moteur spécifique apte à provoquer une rotation du miroir de sortie autour d'un axe contenant un des bords du rectangle source.
   - le dispositif projecteur est apte à réaliser une fonction route, ladite fonction route étant activée automatiquement lorsque la distance instantanée estimée est supérieure à une troisième valeur seuil supérieure à la première valeur seuil.

Un autre objet de l'invention est un véhicule automobile apte à mettre en oeuvre le procédé selon l'invention avec ses caractéristiques principales précédemment précisées, et éventuellement une ou plusieurs caractéristiques complémentaires qui viennent d'être mentionnées.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention.
- à la figure 1, déjà décrite, une représentation schématique de différentes coupures de faisceaux lumineux ;
- à la figure 2, également déjà décrite,
- à la figure 3, également déjà décrite, une représentation schématique d'un exemple de réalisation de dispositif projecteur apte à réaliser notamment la fonction de type autoroute ;
- à la figure 4, une représentation schématique d'une scène de route illustrant par exemple la mise en oeuvre du procédé selon l'invention.

### DESCRIPTION DETAILLEE DES FORMES DE REALISATION PREFEREES DE L'INVENTION

Les éléments apparaissant sur différentes figures conservent, sauf précision contraire, les mêmes références.

Pour permettre à un véhicule mettant en oeuvre le procédé selon l'invention - qui sera désigné dans la suite du document comme premier véhicule -, d'optimiser l'éclairage d'une route sans éblouir d'éventuels véhicules adverses, croisés ou suivis, il est nécessaire, dans un premier temps, de déterminer la présence de ces autres véhicules, et d'évaluer une distance instantanée existant entre le premier véhicule et un véhicule à ne pas éblouir. Par véhicule à ne pas éblouir, on désigne le véhicule dont le conducteur serait le premier ébloui par la production par le premier véhicule d'un faisceau lumineux inadapté. Le véhicule à ne pas éblouir peut bien sur changer dans le temps :il est tout à fait possible de déterminer dans un premier temps un véhicule, désigné comme deuxième véhicule, comme étant le véhicule à ne pas éblouir, puis, dans un deuxième temps, suite par exemple à l'apparition d'un nouveau véhicule désigné comme troisième véhicule, de considérer le troisième véhicule comme étant le véhicule à ne pas éblouir.

Pour déterminer la présence d'autres véhicules et estimer une distance instantanée avec ces véhicules, on prévoit la mise en oeuvre de moyens d'évaluation de distance connus ; ces différents moyens peuvent par exemple être constitués par:
- une caméra associée à des moyens de traitement d'images permettant de repérer les dispositifs projecteurs des autres véhicules ; l'évaluation de l'écart entre les dispositifs projecteurs d'un même véhicule permet la détermination de la distance entre le véhicule considéré et le premier véhicule, ladite distance variant proportionnellement audit écart ; ou
- un lidar ; ou
- un radar ; ou
- un système stéréoscopique basé sur l'utilisation de deux caméras.

Afin d'augmenter la précision dans la mesure de la distance entre le premier véhicule et les autres véhicules, plusieurs de ces moyens peuvent être utilisés conjointement.

Avantageusement, des moyens d'identification de la nature des autres véhicules, relative au caractère croisé ou suivi de ces autres véhicules, sont utilisés dans certains modes de mise en oeuvre du procédé selon l'invention. De tels moyens d'identification mettent par exemple en oeuvre des algorithmes de traitement d'images qui permettent de distinguer les couleurs rouges ou blanches des feux, correspondant respectivement aux feux arrières ou avant des véhicules, ou des algorithmes de traitement d'images permettant de réaliser des suivis de trajectoire.

Dans l'invention, on prévoit d'équiper le véhicule considéré d'un calculateur, de tout moyen d'acquisition d'images, et de tout moyen de traitement d'images et/ou de détection de véhicules susceptibles d'intervenir dans la mise en oeuvre du procédé selon l'invention.

Dans un premier exemple de mise en oeuvre de l'invention, on procède à la distinction entre les véhicules suivis et les véhicules croisés. D'une façon générale, l'activation de la fonction autoroute est réalisée dès que la distance instantanée évaluée, entre le premier véhicule et le véhicule à ne pas éblouir atteint ou dépasse une première valeur seuil, dite valeur seuil d'activation de la fonction autoroute. Dans le premier exemple, on définit une première valeur seuil pour les véhicules croisés et une première valeur seuil pour les véhicules suivis. Par exemple, pour les véhicules croisés, la première valeur seuil est voisine de 200 mètres, alors que pour les véhicules suivis, elle est voisine de 150 mètres. Une telle différence se justifie par le fait qu'un véhicule croisé va se rapprocher plus rapidement du premier véhicule que le véhicule suivi ;pour un véhicule croisé, une activation de la fonction autoroute pour une distance instantanée relativement faible entraînerait la désactivation - comme il le sera expliqué ultérieurement - de cette fonction quasiment immédiatement, ce qui donnerait l'impression d'un appel de phare non provoqué par le conducteur du premier véhicule, et donc gênant.

Si les équipements du premier véhicule détectent la présence simultanée d'un véhicule croisé et d'un véhicule suivis, la première valeur seuil évaluée qui est prise en considération pour provoquer ou non l'activation de la fonction autoroute est la valeur seuil la plus grande.

Dans un deuxième exemple de mise en oeuvre de l'invention, on ne procède pas à la distinction entre les véhicules croisés et les véhicules suivis. Dans ce cas, la première valeur seuil est unique, par exemple égale à 200 mètres. Le véhicule à ne pas éblouir est alors le véhicule détecté le plus proche du premier véhicule.

Avantageusement, on prévoit, dans l'invention, de désactiver automatiquement la fonction autoroute lorsque la distance instantanée évaluée devient inférieure à une deuxième valeur seuil, dite valeur seuil de désactivation de la fonction autoroute. Dans un exemple particulier, la deuxième valeur seuil est sensiblement inférieure, par exemple d'une vingtaine de mètres dans le cas d'un véhicule suivi et d'une cinquantaine de mètres dans le cas d'un véhicule croisé, à la première valeur seuil. Une telle précaution évite des opérations d'activation et de désactivation trop rapprochées dans le temps, qui pourraient nuire au confort de conduite.

Avantageusement, dans l'invention, on prévoit la détermination d'une troisième valeur seuil ;si la distance instantanée mesurée entre le premier véhicule et le véhicule à ne pas éblouir est supérieure à la troisième valeur seuil, une commutation automatique de faisceau lumineux intervient pour activer la fonction route. Dans certains exemples de mise en oeuvre, on prévoit de faire la distinction entre les véhicules croisés et les véhicules suivis ; dans le premier cas, la troisième valeur seuil est de l'ordre de 600 mètres, et dans le deuxième cas, elle est de l'ordre de 350 mètres.

Le procédé selon l'invention, tel qu'il vient d'être décrit au travers de différents exemples, propose donc d'améliorer l'éclairage de la route dans certaines conditions de conduite directement liées au trafic, en proposant l'utilisation d'une fonction intermédiaire de type fonction autoroute. L'utilisation de cette fonction offre alors un niveau d'éclairement intermédiaire entre la fonction code et la fonction route.

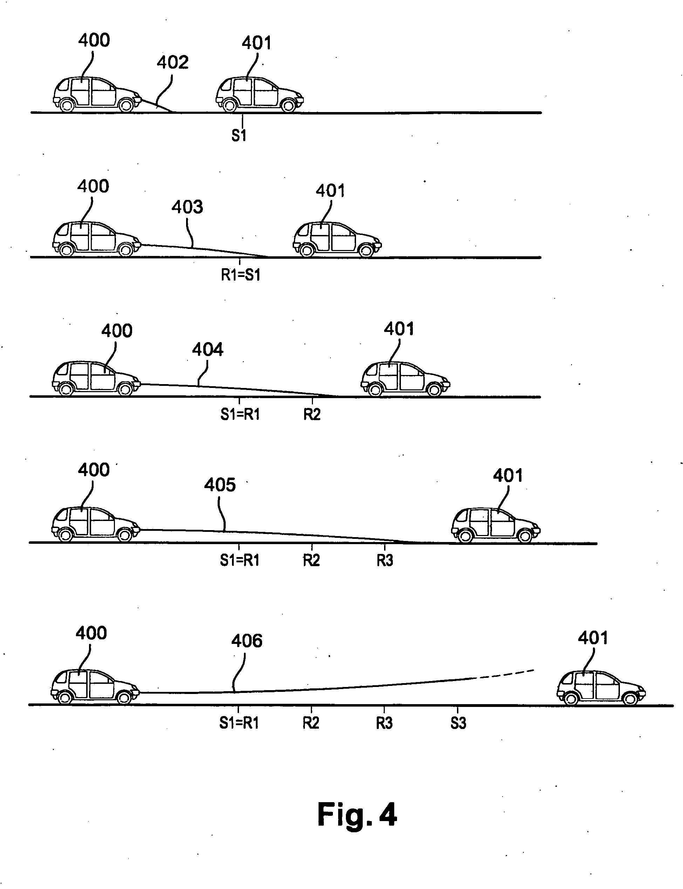

Dans différents modes de mise en oeuvre du procédé selon l'invention, on propose avantageusement de faire évoluer le faisceau lumineux de type autoroute pour l'adapter progressivement aux conditions réelles de circulation en terme de trafic. Un tel exemple de mise en oeuvre est illustré schématiquement à la figure 4, qui montre un premier véhicule 400 apte à mettre en oeuvre le procédé selon l'invention et un véhicule suivi 401.

Par exemple, on propose de définir un premier seuil de référence R1, un deuxième seuil de référence R2 et un troisième seuil de référence R3 qui représentent des valeurs de distance instantanée évaluées, appartenant à la plage d'utilisation de la fonction autoroute comprise entre la première valeur seuil S1 et la troisième valeur seuil S3; à partir de ces valeurs de référence, une opération spécifique est réalisée pour optimiser l'éclairage de la route en faisant évoluer le faisceau de type autoroute.

Comme illustré schématiquement à la figure 4, tant que la première valeur seuil n'est pas atteinte, le premier véhicule 400 produit un faisceau lumineux de type code 402. Une fois que la fonction autoroute est activée, on propose, dès que la distance instantanée déterminée atteint la première valeur de référence, qui peut par exemple être égale à la première valeur seuil, de moduler l'intensité lumineuse générée par le dispositif projecteur réalisant la fonction autoroute. On obtient alors un premier faisceau lumineux 403 de type autoroute. Par exemple, si le dispositif projecteur est du type de celui montré à la figure 2, on propose d'allumer progressivement le deuxième module M2. L'allumage progressif est une fonction croissante de la distance instantanée mesurée : plus cette dernière est importante, plus l'intensité lumineuse est augmentée. Avantageusement, le deuxième module M2 comporte alors une source lumineuse réalisée au moyen de plusieurs diodes électroluminescentes.

Lorsque la distance instantanée atteint la deuxième valeur de référence, on procède alors à une deuxième opération consistant à décaler le faisceau lumineux de type autoroute de telle sorte que sa direction principale d'émission, correspondant à la direction d'intensité maximale du faisceau lumineux considéré, coïncide avec la direction principale d'émission du dispositif projecteur considéré lorsque celui-ci réalise uniquement la fonction code. A cet effet, on peut par exemple utiliser les moyens de mise en mouvement des dispositifs projecteurs intervenant dans les dispositifs projecteurs de type code orientables, connus sous le nom de feux de virage. Le décalage réalisé est une fonction croissante de la distance instantanée mesurée : plus cette dernière est importante, plus le mouvement de décalage est important. On obtient alors un deuxième faisceau lumineux 404 de type autoroute

Lorsque la distance instantanée atteint la troisième valeur de référence, on procède alors à une troisième opération consistant à décaler le faisceau lumineux de type autoroute vers le haut, pour en augmenter la portée. On obtient alors un troisième faisceau lumineux 405 de type autoroute. A cet effet, on peut par exemple utiliser le moteur de correction d'assiette qui assure, dans le cas d'un dispositif projecteur du type de celui montré à la figure 2, un décalage vers le haut de l'ensemble du dispositif projecteur. Avantageusement, on prévoit d'équiper le dispositif projecteur de moyens de déplacement vertical du faisceau lumineux produit par le deuxième module optique M2 sans intervenir sur la position du faisceau lumineux produit par le premier module optique. Par exemple, on prévoit l'utilisation d'un moteur spécifique différent du moteur de correction d'assiette, ledit moteur spécifique assurant un déplacement vertical relatif entre la lentille et la source lumineuse du deuxième module optique M2.

On peut également prévoir de réaliser le module M2 à l'aide d'un système optique comportant une source lumineuse à semi conducteur de forme sensiblement rectangulaire et au moins un miroir de sortie générant par lui-même un faisceau lumineux à coupure, par exemple un cylindre parabolique dont l'axe contient un des côtés du rectangle émissif. Dans ce cas, les moyens de déplacement vertical du faisceau lumineux produit par le module optique M2 qui vient d'être décrit peuvent utiliser un moteur spécifique lui aussi différent du moteur de correction d'assiette, ledit moteur spécifique assurant une rotation du réflecteur de sortie autour d'un axe contenant un des bords du rectangle émissif. Ceci permet de déplacer l'ensemble du faisceau émis par le module M2 sans le déformer.

Là encore, le décalage progressif vers le haut du faisceau lumineux de type autoroute est une fonction croissante de la distance instantanée mesurée : plus cette dernière est importante, plus le décalage observé est important.

Dans un exemple particulier, la première valeur de référence est inférieure à la deuxième valeur de référence, elle-même inférieure à la troisième valeur de référence. Cependant, on prévoit dans certains exemples, que les différentes opérations qui viennent d'être mentionnées débutent alors même que l'opération précédente n'est pas arrivée à son terme et qu'elle se poursuit.

Lorsque la distance déterminée est supérieure à la troisième valeur seuil S3, la fonction route est activée ;elle produit un faisceau 406 dépassant la ligne d'horizon.

## Revendications

1. Procédé d'adaptation automatique d'un faisceau lumineux d'un dispositif projecteur d'un premier véhicule automobile (400) circulant sur une route, ledit dispositif projecteur étant apte à réaliser
- une fonction d'éclairage de type code, produisant un faisceau lumineux de type code (402),
- une fonction d'éclairage de type autoroute, produisant un faisceau lumineux de type autoroute (403 ; 404 ; 405), la fonction d'éclairage de type code étant activée,
le procédé comportant les différentes étapes consistant à :
- détecter la présence d'un deuxième véhicule (401), suivi ou croisé, à ne pas éblouir ;
- estimer une distance instantanée séparant le premier véhicule du deuxième véhicule;
**caractérisé en ce que** le procédé comporte les étapes supplémentaires consistant à :
- déterminer si la distance instantanée estimée est supérieure à une première valeur seuil (S1), dite valeur seuil d'activation de la fonction d'éclairage autoroute,
- le cas échéant, activer la fonction d'éclairage de type autoroute.

2. Procédé selon la revendication précédente **caractérisé en ce qu'**il comporte les différentes étapes supplémentaires consistant à, après l'activation de la fonction d'éclairage de type autoroute :
- estimer une nouvelle distance séparant le premier véhicule d'un troisième véhicule à ne pas éblouir;
- déterminer si la nouvelle distance estimée est inférieure à une deuxième valeur seuil, dite valeur seuil de désactivation de la fonction d'éclairage autoroute ; le cas échéant, désactiver la fonction d'éclairage de type autoroute.

3. Procédé selon la revendication précédente **caractérisé en ce qu'**il comporte les étapes supplémentaires consistant à :
- déterminer la nature du véhicule à ne pas éblouir en établissant si le véhicule à ne pas éblouir est un véhicule croisé ou un véhicule suivi ;
- adapter la première valeur seuil et/ou la deuxième valeur seuil en fonction de la détermination de la nature du véhicule.

4. Procédé selon l'une au moins des revendications précédentes **caractérisé en ce que** le véhicule à ne pas éblouir est le véhicule le plus proche du premier véhicule.

5. Procédé selon l'une au moins des revendications précédentes et selon la revendication 2 **caractérisé en ce que** le deuxième véhicule et le troisième véhicule sont un unique véhicule.

6. Procédé selon l'une au moins des revendications précédentes et selon la revendication 2 **caractérisé en ce que** la première valeur seuil et la deuxième valeur seuil sont identiques.

7. Procédé selon l'une au moins des revendications 1 à 5 et selon la revendication 2 **caractérisé en ce que** la première valeur seuil est sensiblement supérieure à la deuxième valeur seuil.

8. Procédé selon l'une au moins des revendications précédentes **caractérisé en ce que** la première valeur seuil dépend du caractère croisé ou suivi du deuxième véhicule.

9. Procédé selon l'une au moins des revendications précédentes et selon la revendication 2 **caractérisé en ce que** la deuxième valeur seuil dépend du caractère croisé ou suivi du troisième véhicule

10. Procédé selon l'une au moins des revendications précédentes **caractérisé en ce que** l'étape d'activation de la fonction d'éclairage de type autoroute comporte notamment une première opération consistant à moduler une puissance lumineuse supplémentaire s'ajoutant à une puissance lumineuse disponible pour la réalisation de la fonction d'éclairage de type code.

11. Procédé selon l'une au moins des revendications précédentes **caractérisé en ce que** l'étape d'activation de la fonction d'éclairage de type autoroute comporte notamment une deuxième opération consistant à décaler vers l'axe optique du dispositif projecteur observé lorsqu'il produit uniquement le faisceau de type autoroute, un axe d'intensité maximale du faisceau lumineux de type autoroute.

12. Procédé selon l'une au moins des revendications précédentes **caractérisé en ce que** l'étape d'activation de la fonction d'éclairage de type autoroute comporte notamment une troisième opération consistant à décaler vers le haut un faisceau lumineux complémentaire produit lors de l'activation de la fonction d'éclairage de type autoroute.

13. Procédé selon l'une au moins des revendications précédentes **caractérisé en ce que** l'étape d'activation de la fonction d'éclairage de type autoroute comporte notamment une quatrième opération consistant à décaler vers le haut le faisceau lumineux de type autoroute.

14. Procédé selon les revendication 10, 11, 12 et 13, **caractérisé en ce que** les opérations de modulation et de décalage sont mises en oeuvre de façon progressive, en fonction de la distance évaluée entre le premier véhicule et le véhicule à ne pas éblouir, pour optimiser l'éclairage de la route.

15. Procédé selon la revendication précédente, **caractérisé en ce que** :
- la première opération ; ou
- la deuxième opération ; ou
- soit la troisième opération soit la quatrième opération ;
sont réalisées si la distance instantanée estimée est supérieure respectivement à une première valeur de référence (R1), à une deuxième valeur de référence (R2), ou à une troisième valeur de référence (R3), avec la troisième valeur de référence supérieure à la deuxième valeur de référence, et la deuxième valeur de référence supérieure à la première valeur de référence.

16. Procédé selon l'une au moins des revendications précédentes et selon la revendication 12 **caractérisé en ce que** le dispositif projecteur est constitué d'un premier module optique, apte à réaliser la fonction code, et d'un deuxième module optique, intervenant dans la réalisation de la fonction autoroute, le premier module optique et le deuxième module optique étant autonomes, le deuxième module optique comportant notamment une source lumineuse, une lentille et un moteur spécifique apte à provoquer un mouvement relatif entre la lentille et ladite source lumineuse.

17. Procédé selon l'une au moins des revendications 1 à 15 et selon la revendication 12 **caractérisé en ce que** le dispositif projecteur est constitué d'un premier module optique, apte à réaliser la fonction code, et d'un deuxième module optique, intervenant dans la réalisation de la fonction autoroute, le premier module optique et le deuxième module optique étant autonomes, le deuxième module optique comportant notamment une source lumineuse à semi conducteur de forme sensiblement rectangulaire, un miroir de sortie générant par lui-même un faisceau lumineux à coupure et un moteur spécifique apte à provoquer une rotation du miroir de sortie autour d'un axe contenant un des bords du rectangle source.

18. Procédé selon l'une au moins des revendications précédentes **caractérisé en ce que** le dispositif projecteur est apte à réaliser une fonction route, ladite fonction route étant activée automatiquement lorsque la distance instantanée estimée est supérieure à une troisième valeur seuil (S3) supérieure à la première valeur seuil.

19. Véhicule automobile apte à mettre en oeuvre le procédé selon l'une au moins des revendications précédentes.

## Patentansprüche

1. Verfahren zum automatischen Anpassen eines Lichtbündels einer Scheinwerfervorrichtung eines eine Straße befahrenden, ersten Kraftfahrzeugs (400), wobei die Scheinwerfervorrichtung auszuführen vermag:
- eine Lichtfunktion vom Typ Abblendlicht, die ein Lichtbündel vom Typ Abblendlicht (402) erzeugt,
- eine Lichtfunktion vom Typ Autobahnlicht, die ein Lichtbündel vom Typ Autobahnlicht (403; 404; 405) erzeugt, wobei die Lichtfunktion vom Typ Abblendlicht aktiviert ist,
wobei das Verfahren die verschiedenen Schritte umfasst bestehend aus:
- Erkennen des Vorhandenseins eines vorausfahrenden oder entgegenkommenden zweiten, nicht zu blendenden Fahrzeugs (401);
- Schätzen eines momentanen Abstands zwischen dem ersten Fahrzeug und dem zweiten Fahrzeug;
**dadurch gekennzeichnet, dass** das Verfahren die zusätzlichen Schritte umfasst des:
- Ermittelns, ob der momentane geschätzte Abstand größer ist als ein als Schwellenwert zur Autobahnlicht-Aktivierung bezeichneter erster Schwellenwert (S1),
- gegebenenfalls Aktivierens des Autobahnlichts.

2. Verfahren nach dem vorhergehenden Anspruch,
**dadurch gekennzeichnet, dass** es nach Aktivieren des Autobahnlichts die verschiedenen zusätzlichen Schritte umfasst bestehend aus:
- Schätzen eines neuen Abstands zwischen dem ersten Fahrzeug und einem dritten, nicht zu blendenden Fahrzeug;
- Ermitteln, ob der neue geschätzte Abstand kleiner ist als ein als Schwellenwert zur Autobahnlicht-Deaktivierung bezeichneter zweiter Schwellenwert; gegebenenfalls Deaktivieren des Autobahnlichts.

3. Verfahren nach dem vorhergehenden Anspruch,
**dadurch gekennzeichnet, dass** es die zusätzlichen Schritte umfasst bestehend aus:
- Ermitteln der Art des nicht zu blendenden Fahrzeugs, indem festgestellt wird, ob es sich bei dem nicht zu blendenden Fahrzeug um ein entgegenkommendes Fahrzeug oder ein vorausfahrendes Fahrzeug handelt;
- Anpassen des ersten Schwellenwerts und/oder des zweiten Schwellenwerts abhängig von der ermittelten Art des Fahrzeugs.

4. Verfahren nach wenigstens einem der vorhergehenden Ansprüche,
**dadurch gekennzeichnet, dass** es sich bei dem nicht zu blendenden Fahrzeug um das Fahrzeug handelt, das dem ersten Fahrzeug am nächsten ist.

5. Verfahren nach wenigstens einem der vorhergehenden Ansprüche und nach Anspruch 2,
**dadurch gekennzeichnet, dass** es sich bei dem zweiten Fahrzeug und dem dritten Fahrzeug um ein einziges Fahrzeug handelt.

6. Verfahren nach wenigstens einem der vorhergehenden Ansprüche und nach Anspruch 2,
**dadurch gekennzeichnet, dass** der erste Schwellenwert und der zweite Schwellenwert identisch sind.

7. Verfahren nach wenigstens einem der Ansprüche 1 bis 5 und nach Anspruch 2,
**dadurch gekennzeichnet, dass** der erste Schwellenwert deutlich größer ist als der zweite Schwellenwert.

8. Verfahren nach wenigstens einem der vorhergehenden Ansprüche,
**dadurch gekennzeichnet, dass** der erste Schwellenwert davon abhängt, ob es sich bei dem zweiten Fahrzeug um ein entgegenkommendes oder ein vorausfahrendes Fahrzeug handelt.

9. Verfahren nach wenigstens einem der vorhergehenden Ansprüche und nach Anspruch 2,
**dadurch gekennzeichnet, dass** der zweite Schwellenwert davon abhängt, ob es sich bei dem dritten Fahrzeug um ein entgegenkommendes oder ein vorausfahrendes Fahrzeug handelt.

10. Verfahren nach wenigstens einem der vorhergehenden Ansprüche,
**dadurch gekennzeichnet, dass** der Autobahnlicht-Aktivierungsschritt insbesondere einen ersten Vorgang zum Modulieren einer zusätzlichen Lichtleistung umfasst, die zu einer zur Ausführung des Abblendlichts bereitstehenden Lichtleistung hinzukommt.

11. Verfahren nach wenigstens einem der vorhergehenden Ansprüche,
**dadurch gekennzeichnet, dass** der Autobahnlicht-Aktivierungsschritt insbesondere einen zweiten Vorgang zum Verlagern einer Achse maximaler Intensität des Autobahnlichts zur optischen Achse der betreffenden Scheinwerfervorrichtung hin umfasst, wenn diese ausschließlich das Autobahnlicht erzeugt.

12. Verfahren nach wenigstens einem der vorhergehenden Ansprüche,
**dadurch gekennzeichnet, dass** der Autobahnlicht-Aktivierungsschritt insbesondere einen dritten Vorgang zum Verlagern eines beim Aktivieren des Autobahnlichts erzeugten zusätzlichen Lichtbündels nach oben umfasst.

13. Verfahren nach wenigstens einem der vorhergehenden Ansprüche,
**dadurch gekennzeichnet, dass** der Autobahnlicht-Aktivierungsschritt insbesondere einen vierten Vorgang zum Verlagern des Autobahnlichtbündels nach oben umfasst.

14. Verfahren nach den Ansprüchen 10, 11, 12 und 13,
**dadurch gekennzeichnet, dass** der Modulations- und Verlagerungsvorgang abhängig vom geschätzten Abstand zwischen dem ersten Fahrzeug und dem nicht zu blendenden Fahrzeug zur Optimierung der Fahrbahnausleuchtung schrittweise erfolgt.

15. Verfahren nach dem vorhergehenden Anspruch,
**dadurch gekennzeichnet, dass**
- der erste Vorgang; oder
- der zweite Vorgang; oder
- entweder der dritte Vorgang oder der vierte Vorgang;
ausgeführt werden, wenn der geschätzte momentane Abstand größer ist als ein erster Bezugswert (R1) bzw. ein zweiter Bezugswert (R2) bzw. ein dritter Bezugswert (R3), wobei der dritte Bezugswert größer ist als der zweite Bezugswert und der zweite Bezugswert größer ist als der erste Bezugswert.

16. Verfahren nach wenigstens einem der vorhergehenden Ansprüche und nach Anspruch 12,
**dadurch gekennzeichnet, dass** die Scheinwerfervorrichtung von einem ersten, das Abblendlicht ausführenden Optikmodul und einem zweiten, bei der Ausführung des Autobahnlichts mitwirkenden Optikmodul gebildet ist, wobei das erste Optikmodul und das zweite Optikmodul voneinander unabhängig sind, wobei das zweite Optikmodul insbesondere eine Lichtquelle, eine Linse und einen speziellen Antrieb umfasst, der eine Relativbewegung zwischen der Linse und der Lichtquelle zu bewirken vermag.

17. Verfahren nach wenigstens einem der Ansprüche 1 bis 15 und nach Anspruch 12,
**dadurch gekennzeichnet, dass** die Scheinwerfervorrichtung von einem ersten, das Abblendlicht ausführenden Optikmodul und einem zweiten, bei der Ausführung des Autobahnlichts mitwirkenden Optikmodul gebildet ist, wobei das erste Optikmodul und das zweite Optikmodul voneinander unabhängig sind, wobei das zweite Optikmodul insbesondere eine im Wesentlichen rechteckige Halbleiter-Lichtquelle, einen Auskoppelspiegel, der ein Lichtbündel mit Hell-Dunkel-Grenze selbst erzeugt, und einen speziellen Antrieb umfasst, der eine Drehung des Auskoppelspiegels um eine Achse zu bewirken vermag, in der sich einer der Ränder des Lichtquellenrechtecks befindet.

18. Verfahren nach wenigstens einem der vorhergehenden Ansprüche,
**dadurch gekennzeichnet, dass** die Scheinwerferanlage ein Fernlicht auszuführen vermag, wobei das Fernlicht automatisch aktiviert wird, wenn der geschätzte momentane Abstand größer ist als ein dritter Schwellenwert (S3), der größer ist als der erste Schwellenwert.

19. Kraftfahrzeug, das das Verfahren nach wenigstens einem der vorhergehenden Ansprüche auszuführen vermag.

## Claims

1. Process for automatic adaptation of a light beam of a headlight device of a first motor vehicle (400) travelling on a road, the said headlight device being able to carry out:
- a lighting function of the low-beam type, producing a light beam of the low-beam type (402);
- a lighting function of the motorway type, producing a light beam of the motorway type (403; 404; 405), the lighting function of the low-beam type being activated,
the process comprising the different steps consisting of:
- detecting the presence of a second vehicle (401), which is being followed or crossed, and is not to be dazzled;
- estimating an instantaneous distance which separates the first vehicle from the second vehicle,
characterised that the process comprises the additional steps consisting of:
- determining whether the instantaneous distance estimated is higher than a first threshold value (S1), known as the threshold value for activation of the motorway lighting function;
- if applicable, activating the lighting function of the motorway type

2. Process according to the preceding claim, **characterised in that** it comprises the different additional steps, consisting of, after the activation of the lighting function of the motorway type:
- estimating a new distance which separates the first vehicle from a third vehicle not to be dazzled;
- determining whether the new distance estimated is lower than a second threshold value, known as the threshold value for deactivation of the motorway lighting function; if applicable, deactivating the lighting function of the motorway type.

3. Process according to the preceding claim, **characterised in that** it comprises the additional steps consisting of:
- determining the nature of the vehicle not to be dazzled by establishing whether the vehicle not to be dazzled is a vehicle which is being crossed or a vehicle which is being followed;
- adapting the first threshold value and/or the second threshold value according to the determination of the nature of the vehicle.

4. Process according to at least one of the preceding claims, **characterised in that** the vehicle not to be dazzled is the vehicle closest to the first vehicle.

5. Process according to at least one of the preceding claims and according to claim 2, **characterised in that** the second vehicle and the third vehicle are a single vehicle.

6. Process according to at least one of the preceding claims and according to claim 2, **characterised in that** the first threshold value and the second threshold value are identical.

7. Process according to at least one of claims 1 to 5 and according to claim 2, **characterised in that** the first threshold value is substantially higher than the second threshold value.

8. Process according to at least one of the preceding claims, **characterised in that** the first threshold value depends on the crossed or followed nature of the second vehicle.

9. Process according to at least one of the preceding claims and according to claim 2, **characterised in that** the second threshold value depends on the crossed or followed nature of the third vehicle.

10. Process according to at least one of the preceding claims, **characterised in that** the step of activation of the lighting function of the motorway type comprises in particular a first operation consisting of modulating an additional lighting power which is added to a lighting power available for implementation of the lighting function of the low-beam type.

11. Process according to at least one of the preceding claims, **characterised in that** the step of activation of the lighting function of the motorway type comprises in particular a second operation consisting of offsetting towards the optical axis of the headlight device observed when it produces only the beam of the motorway type, an axis of maximum intensity of the light beam of the motorway type.

12. Process according to at least one of the preceding claims, **characterised in that** the step of activation of the lighting function of the motorway type comprises in particular a third operation consisting of offsetting upwards an additional light beam produced during the activation of the lighting function of the motorway type.

13. Process according to at least one of the preceding claims, **characterised in that** the step of activation of the lighting function of the motorway type comprises in particular a fourth operation consisting of offsetting upwards the light beam of the motorway type.

14. Process according to claims 10, 11, 12 and 13, **characterised in that** the operations of modulation and offsetting are implemented progressively, according to the distance evaluated between the first vehicle and the vehicle not to be dazzled, in order to optimise the lighting of the road.

15. Process according to the preceding claim, **characterised in that**:
- the first operation; or
- the second operation; or
- either the third operation or the fourth operation,
is carried out if the instantaneous distance estimated is higher respectively than a first reference value (R1), than a second reference value (R2), or than a third reference value (R3), with the third reference value higher than the second reference value, and the second reference value higher than the first reference value.

16. Process according to at least one of the preceding claims and according to claim 12, **characterised in that** the headlight device is constituted by a first optical module which can carry out the low-beam function, and a second optical module which intervenes in the implementation of the motorway function, the first optical module and the second optical module being autonomous, the second optical module comprising in particular a source of light, a lens, and a specific motor which can give rise to relative movement between the lens and the said source of light.

17. Process according to at least one of claims 1 to 15 and according to claim 12, **characterised in that** the headlight device is constituted by a first optical module which can carry out the low-beam function, and a second optical module which intervenes in the implementation of the motorway function, the first optical module and the second optical module being autonomous, the second optical module comprising in particular a source of light with a semiconductor with a substantially rectangular form, an output mirror which itself generates a cut-off light beam, and a specific motor which can give rise to rotation of the output mirror around an axis which contains one of the edges of the source rectangle.

18. Process according to at least one of the preceding claims, **characterised in that** the headlight device can carry out a high-beam function, the said high-beam function being activated automatically when the instantaneous distance estimated is higher than a third threshold value (S3) which is higher than the first threshold value.

19. Motor vehicle which can implement the process according to at least one of the preceding claims.
